# EUROPEAN PATENT SPECIFICATION

(11) **EP 2 650 118 B1**
(45) Date of publication and mention of the grant of the patent: **06.09.2017**
(21) Application number: 13161678.1
(22) Date of filing: 28.03.2013
(51) Int. Cl.: B32B 5/18, B32B 5/26, B32B 7/04, B32B 21/02, B32B 21/10, B32B 21/14, B32B 5/24, B32B 5/02, B32B 38/08, B32B 37/12, E04B 1/80, E04B 1/94, B32B 13/00, B32B 15/14, B32B 21/00, B32B 27/12

(54) **Fire retardant insulating construction panel**
Feuerfeste Isolierbauplatte
Panneau de construction isolant et résistant au feu

(30) Priority: 29.03.2012 NL 2008566
(43) Date of publication of application: 16.10.2013
(73) Proprietor: IsoBouw Systems B.V., 5711 EG Someren (NL)
(72) Inventor: Buijk, Christianus Marcus Gijsbertus Maria, 5616 HE EINDHOVEN (NL); Smits, Hugo Alexander, 5644 CA EINDHOVEN (NL); Eilers, Gerardus Wilhelmus Jozef, 5706 BJ HELMOND (NL)
(74) Representative: Algemeen Octrooi- en Merkenbureau B.V.

(56) References cited:
- EP-A1- 0 005 812
- FR-A1- 2 308 748
- GB-A- 2 053 798
- US-B1- 6 205 729
- DATABASE WPI Week 200630 Thomson Scientific, London, GB; AN 2006-289166 XP002688203, & JP 2006 104702 A (FUJI KOGYO KK) 20 April 2006 (2006-04-20)
- DATABASE WPI Week 201019 Thomson Scientific, London, GB; AN 2010-C43750 XP002688204, & CN 101 649 653 A (XIA L) 17 February 2010 (2010-02-17)

## Description

The present invention relates to a fire retardant insulating construction panel comprising an insulation layer that comprises a foam. The present invention further relates to a method for producing the same.

Partly because of stricter legislation, there is a need for insulating construction panels exhibiting improved fire retardancy properties. More specifically, it concerns the resistance that a construction panel offers to fire breaking through from the inner side of a space to the outer side thereof.

From Japanese publication JP 2006-104702 there is known a non-flammable construction panel which is made up of a foam layer on which an assembly of layers is provided, viz. a network layer on which a so-called top coat layer is present.

From Chinese publication CN 101 649 653 there is known a fire retardant insulating construction panel, wherein a foam is provided with a so-called "waterproof and fire retardant polymer cement sheet" on either side thereof, such a flame retardant layer being made up of a reinforcement layer, for example built up of glass fibres, impregnated with a flame retardant binder, resulting in a foam layer which is embedded on either side with a reinforcement layer impregnated with a flame retardant binder.

British publication GB 2 053 798 discloses a fire retardant insulating construction panel comprising a foam layer, on which a metal foil impervious to moisture and liquid is provided, which metal foil is subsequently coated with a fibrous network material.

European publication EP 0 005 812 discloses a fire retardant insulating construction panel, viz. a foam layer which is embedded in a glass fibre layer on either side, which glass fibre layer is additionally provided with a fire retardant PUR lacquer.

Furthermore from U.S. publication US 6205729 and French publication FR 2 308 748 panels are known which are used for construction purposes.

The object of the present invention is to provide a fire retardant insulating construction panel which exhibits improved fire retardancy properties without this harming or at least substantially harming the current advantageous properties of insulating construction panels as regards the thickness of the construction panel, the insulation value of the construction panel, the (in)sensitivity to moisture of the construction panel, the strength of the construction panel, the weight of the insulation panel and the sawability of the construction panel.

In order to achieve the object of the invention, the invention provides a fire retardant insulating construction panel wherein the construction panel also comprises at least one composite fire retardant layer bonded to the insulation layer, which fire retardant layer comprises a reinforcement layer, which reinforcement layer comprises at least one carrier layer comprising a scrim and at least one substrate layer comprising a layer of the non-woven type bonded to the carrier layer, wherein the fire retardant layer further comprises a layer of a fire retardant adhesive on the side of the reinforcement layer remote from the insulation layer, wherein the fire retardant adhesive extends up to the insulation layer and bonds to the insulation layer.

Due to the use of the reinforcement layer with the sublayers, more in particular a carrier layer and a substrate layer bonded thereto, in combination with the fire retardant adhesive, the improvement obtained as regards the fire retardancy properties of the insulating construction panel is significantly greater than could be expected on the basis of the individual components of the combination. A possible explanation for this is the fact that the risk of the formation of cracks in the adhesive layer during fire is significantly reduced on account of the anchoring of the adhesive layer in the underlying reinforcement layer. In the absence of the reinforcement layer, such cracking in the adhesive layer would take place relatively quickly, for example within one minute, in case of fire, whereupon fire would quickly break through the adhesive layer and subsequently through the construction panel. The substrate layer prevents the formation of cracks precisely because of the relatively fine structure thereof, whilst the carrier layer imparts strength to the substrate layer, so that the latter will not collapse as a result of the thermal stresses that will occur because of the heat, to which stresses the substrate layer is sensitive because of its relatively fine structure. The hypothetical absence of even only one of the layers from the group of substrate layer, carrier layer or an adhesive layer would result in a significant deterioration of the fire retardancy properties, whereas the unique combination of said layers as described above, on the other hand, will lead to surprisingly good fire retardancy properties. Thus it has been found that a construction panel according to the invention can meet the legal requirement of fire retardancy, for example, which could not be expected on the bases of the fire retardancy properties of the individual layers. Moreover it has been found that the use of the aforesaid layers on the insulation layer will not, or at least not substantially, adversely affect the thickness of the construction panel, the insulation value of the construction panel, the (in)sensitivity to moisture of the construction panel, the strength of the construction panel, the weight of the insulation panel and the sawability of the construction panel.

The present inventors further assume that because of the combination and the specific selection of the materials used for the carrier layer and the substrate layer, the fire retardant adhesive will penetrate into both layers. A fire retardant adhesive thus applied to the substrate layer will pass through the substrate layer and the carrier layer and effect an anchoring with the layer present thereunder, in particular the insulation material. The fire retardant effect of the fire retardant adhesive thus affects not only the layer of adhesive applied to the substrate layer, but also all layers present thereunder, in particular the carrier layer. The adhesive effect of the aforesaid adhesive provides a durable bond between the insulation material and the reinforcement layer. The reinforcement layer is thus in fact impregnated with the fire retardant adhesive. One aspect of the present invention is that the fire retardant adhesive can penetrate through the carrier layer and the substrate layer, so that the fire retardant effect is obtained over the entire thickness or cross-section of the assembly of carrier layer and substrate layer. To realise such an effect, both the carrier layer and the substrate layer must allow impregnation or penetration of a fire retardant adhesive.

In a special embodiment it is also possible to provide the insulation layer with an adhesive, which may or may not be fire retardant, for durably bonding the reinforcement layer thereto by means of said adhesive, whereupon a fire retardant adhesive is applied to the reinforcement layer thus provided, on which layer of adhesive a finishing layer may finally be provided, said fire retardant adhesive functioning to effect a durable bond between the finishing layer and the reinforcement layer. The carrier layer comprises a scrim, which scrim can be regarded as a network or gauze made of continuous filament products, in particular also yarns or fibres. Such a scrim is preferably made of fibres selected from the group of polyester, glass, cellulose, aramid, polyethylene naphthalate (PEN), or combinations thereof, which materials exhibit relatively stable behaviour at elevated temperatures.

The scrim comprises apertures, preferably arranged in a regular pattern. The scrim is preferably of the gauze type, said gauze furthermore preferably having a mesh width ranging between 1.0 cm and 5.0 cm. Thus, an advantageous equilibrium is achieved between the size of the apertures in which the fire retardant adhesive is present and the strengthening effect that the carrier layer has on the substrate layer.

Advantageously, the centre-to-centre distance of parallel yarns of the scrim ranges between 2 mm and 5 mm, and/or the mass of the yarns of the gauze ranges between 30 g/km and 300 g/km, preferably between 50 g/km and 100 g/km.

The substrate layer comprises a layer of the nonwoven type. The substrate layer will have advantageous properties if the layer comprises fibres having a thickness between 5 µm and 20 µm, preferably between 10 µm and 15 µm, and/or comprises fibres having a length ranging between 5 mm and 80 mm, preferably between 10 mm and 30 mm, and/or the web has a weight ranging between 20 g and 200 g, preferably between 25 g and 50 g.

The substrate layer is preferably a nonwoven comprising glass, polyester, polyethylene terephthalate (PET), polypropylene, polyethylene, polyamide and cellulose, or combinations thereof.

To obtain a durable bond between the substrate layer and the carrier layer it is preferable to use an adhesive, which adhesive is selected from the group of acrylate, ethylene vinyl acetate, polyurethane, polyvinyl alcohol, polyvinyl acetate, polyvinyl chloride and styrene butadiene, or combinations thereof.

In a special embodiment it is also possible to use the present fire resistant adhesive for effecting a durable bond between the substrate layer and the carrier layer.

In another embodiment, the substrate layer and the carrier layer are preferably placed separately one on top of the other without a durable bond existing at that point in time, which bond is realised by the use of an adhesive, in particular the present fire resistant adhesive, for example by impregnating the carrier layer and the substrate layer with the intended adhesive, for example by submersion in a liquid bath for some time, or by passing the whole through roller structures.

According to another preferred embodiment, the reinforcement layer comprises one or more additional sublayers that are pervious to fire resistant adhesive, which one or more additional sublayers are directly bonded to the substrate layer and/or the carrier layer. Such sublayers can further contribute to the stability of the reinforcement layer comprising the carrier layer and the substrate layer, and also provide additional space for anchoring the adhesive therein.

According to a special embodiment of the present construction panel, the reinforcement layer comprises an assembly of substrate layer, carrier layer, substrate layer and carrier layer. However, the number of substrate layers and carrier layers is not limited thereto and, depending on the intended use, the number of layers can be changed. In a specific embodiment it is possible to position the carrier layer directly against the insulation layer, in which case it is also possible, however, to position the substrate layer directly against the insulation layer. It is also possible to use a combination of substrate layer and carrier layer, in which case a carrier layer is used in a sandwich construction with substrate layers, for example. The carrier layer and substrate layer used in the present invention are characterised by a certain degree of permeability to the fire resistant adhesive. Said permeability makes it possible to have the fire retardant pass through the substrate layer as well as the carrier layer, in particular by penetration or impregnation, so that a good fire retardancy is obtained over the cross-section of the substrate layer and the carrier layer, as well as a good bond thereof to the insulation and the finishing layer, if applicable. The adhesive extends up to the insulation layer and bonds to the insulation layer. The provision of adhesive in the reinforcement layer can thus be accompanied by the bonding of the reinforcement layer to the insulation layer. Partially depending on the type of fire resistant adhesive, the weight of the fire resistant adhesive preferably ranges between 0.5 kg and 4 kg per square metre, furthermore preferably between 1 kg and 3 kg per square metre, even more preferably between 1.5 kg and 2.5 kg per square metre.

The adhesive composition in the present fire resistant adhesive is preferably selected from the group of polycondensation adhesives, inorganic adhesives and polyurethane adhesives, or combinations thereof. To perform the bonding function, the adhesive compositions mentioned herein additionally comprise usual additives such as anti-sedimentation agents, acids, accelerants, liquefiers, catalysts, pigments and the like. The adhesive compositions may be water-based or solvent-based compositions.

If a polycondensation adhesive is used, it is preferably selected from the group of one or more of UF adhesive (urea formaldehyde), melamine adhesive, MUF adhesive (melamine urea formaldehyde), MF adhesive (melamine formaldehyde), MDI adhesive (methane diphenyl diisocyanate), isocyanate adhesive, PF adhesive (phenol formaldehyde), RF adhesive (resorcinol formaldehyde adhesive) and resorcin phenol formaldehyde adhesive. In a special embodiment, the combination of UF adhesive (urea formaldehyde) with kaolin as the additive is preferred.

In general it is furthermore preferable if the fire retardant adhesive comprises one or more additives selected from the group of minerals and carbon-derived additives.

In case minerals are selected from the group of silicates, said minerals are preferably phyllosilicates, in particular micas and clay minerals, more in particular kaolinite, or combinations thereof.

In case one or a number of carbon-derived additives is/are used as (an) additive(s), said additives are preferably selected from the group of active carbon, soot, graphite, expandable graphite, graphene, or combinations thereof.

Advantageous fire retardancy properties are furthermore obtained if the present fire retardant adhesive comprises additives in an amount of 10-75 wt.%, preferably 20-60 wt.%, in particular 30-45 wt.%, based on the total weight of the fire retardant. An amount of more than 75% will lead to a fire retardant which is difficult to process and which moreover will result in an insufficient bond.

The insulation layer preferably comprises a foam selected from the group of expanded polystyrene (EPS), polyurethane, polyisocyanurate, resol foam, extruded polystyrene (XPS), polylactic acid (PLA) and epoxy, or combinations thereof.

Said materials have excellent insulation properties and thanks to the invention they can be used in a fire retardant insulation panel according to the invention in spite of the poor or mediocre fire retardancy properties of said materials.

The thickness of the insulation layer in that case preferably ranges between 10 mm and 500 mm, preferably between 50 mm and 250 mm.

The fire retardant adhesive layer may be present on the outer side of the construction panel, in which case said adhesive layer also functions as a coating, for example a finishing coating having visual properties that are acceptable for certain applications.

Alternatively, the construction panel may also comprise a finishing layer on at least one of its outer sides, in which case the fire retardant layer, in particular the reinforcement layer and the fire retardant adhesive, is disposed between the insulation layer and the finishing layer. Said finishing layer may for example be suitable for being stuccoed or for independently functioning as a layer that remains in sight. Such a finishing layer can also contribute to the fire retardancy properties of the construction panel. To realise a very efficient production, the finishing layer is preferably bonded to the insulation layer by means of an adhesive, preferably the present fire retardant adhesive. It is therefore possible to produce a construction panel whose outer sides are finishing layers, so that the layer of insulation material is "embedded" between the two finishing layers.

An advantageous embodiment of the finishing layer is obtained if the finishing layer comprises chipboard. The finishing layer in particular comprises a hard board material selected from the group of wood, plastic (polymers), metal/alloys, gypsum and chipboard, or combinations thereof, with chipboard being preferred in a special embodiment. In another embodiment, it is also possible to use flexible foils/webs as a finishing layer, starting from the group of metals, plastics and paper, but also a mineralised glass web can be regarded as a special embodiment of a finishing layer.

A suitable thickness of the finishing layer ranges between 2.0 mm and 25 mm, preferably between 2.5 mm and 10 mm.

The present invention also relates to a finishing layer, in particular for use in a construction panel according to the invention which comprises a finishing layer as described for a number of preceding embodiments. The production process for producing a construction panel according to the invention can take place in a simple manner in that case by bonding the finishing layer according to the invention to the insulation layer by means of an adhesive layer or the like. It is desirable that the fire retardant adhesive extends over the reinforcement layer. In such an embodiment, the fire retardant adhesive passes through the reinforcement layer, thereby realising a durable bond between the substrate layer and the carrier layer, which adhesive layer can also effect a bond between the reinforcement layer and any desired layer to be provided on the reinforcement layer (yet). The above-described embodiment of the finishing layer is not provided with an insulation layer (yet), therefore.

The production process of the finishing layer can be arranged very efficiently if the adhesive extends up to the finishing layer and bonds to the finishing layer.

The present invention further provides a method for producing a construction panel according to the invention, comprising the steps of
A providing an insulation layer comprising a foam,
B bonding a reinforcement layer to at least one side of the insulation layer, wherein
B1 either the reinforcement layer is provided with an adhesive layer of a fire retardant adhesive prior to the bonding of the reinforcement layer to the insulation layer,
B2 or the reinforcement layer is bonded to the insulation layer by applying an adhesive layer of a fire retardant adhesive from the side of the reinforcement layer remote from the insulation layer, wherein the adhesive penetrates as far as the insulation layer and bonds to the insulation material,
B3 or an adhesive layer of a fire retardant adhesive is supplied to the side of the reinforcement layer remote from the insulation layer after the bonding of the reinforcement layer to the insulation layer, with the adhesive extending into the reinforcement layer.

For producing a construction panel according to the invention, the method according to the invention is further characterised in that a finishing layer is provided on the side of the reinforcement layer remote from the insulation layer, wherein either, if step B1 is used, the reinforcement layer is bonded to the finishing layer, preferably by means of the fire retardant adhesive, prior to the bonding of the reinforcement layer to the insulation layer, or, if step B2 or step B3 is used, the finishing layer is bonded to the insulation layer after the application of the adhesive layer, preferably by means of the fire retardant adhesive.

Advantageous fire retardancy properties are obtained if the fire retardant adhesive is applied in an amount ranging between 0.5 kg and 4 kg per square metre of construction panel, preferably between 1 kg and 3 kg per square metre, more preferably between 1.5 kg and 2.5 kg per square metre.

The present invention further relates to a method for producing a construction panel as described above, comprising the steps of:
A providing a carrier layer,
B providing a substrate layer,
C impregnating an assembly of carrier layer and substrate layer with the fire retardant adhesive as described above,
D providing an insulation layer comprising a foam,
E providing a finishing layer, wherein
F1 either the insulation layer is provided with an adhesive, in particular an adhesive as described in the foregoing, after which the assembly of carrier layer and substrate layer impregnated in step C is durably bonded to the aforesaid insulation layer,
F2 or the finishing layer according to step E is provided with an adhesive, in particular an adhesive as described in the foregoing, after which the assembly of carrier layer and substrate layer impregnated in step C is durably bonded to the aforesaid finishing layer,
whereupon, possibly after step F1, a finishing layer according to step E is provided in order to obtain the intended construction panel, in particular using an adhesive as described in the foregoing,
after which, possibly after step F2, an insulation layer according to step D is provided in order to obtain the intended construction panel, in particular using an adhesive as described in the foregoing.

Accordingly the invention also relates to an assembly of carrier layer and substrate layer impregnated with the present fire retardant adhesive, which assembly may also be built up of one or more carrier layers and/or substrate layers.

Although mention is made of a carrier layer and a substrate layer in the discussion of the aforementioned methods, it should be understood that combinations of several carrier and substrate layers are possible in certain embodiments. The method for producing the present construction panel comprises the following steps:
A providing an insulation layer comprising a foam,
B providing a reinforcement layer, and
C applying an adhesive layer of a fire retardant adhesive such that the reinforcement layer of step B is embedded between the aforesaid adhesive layer and the foam-comprising insulation layer of step A, with the fire retardant adhesive penetrating up to the insulation layer of step A and bonding thereto.

In a special embodiment, it is desirable that the side of the reinforcement layer remote from the insulation layer be bonded to a finishing layer, preferably by means of the fire retardant adhesive.

In certain situations it is desirable to carry out the method for producing a construction panel in the following manner:
N providing a carrier layer,
O providing a substrate layer,
P impregnating the assembly of the carrier layer of step N and the substrate layer of step O with a fire retardant adhesive,
Q providing an insulation layer comprising a foam, and
R durably bonding the assembly of carrier layer and substrate layer impregnated in step P to the aforesaid insulation layer of step Q, and possibly providing a finishing layer on the side remote from the insulation layer, wherein, in a special embodiment, use is made of the fire retardant adhesive for realising the bond between the assembly obtained in step P and the insulation layer of step Q on the one hand and the finishing layer and the side remote from the insulation layer on the other hand.

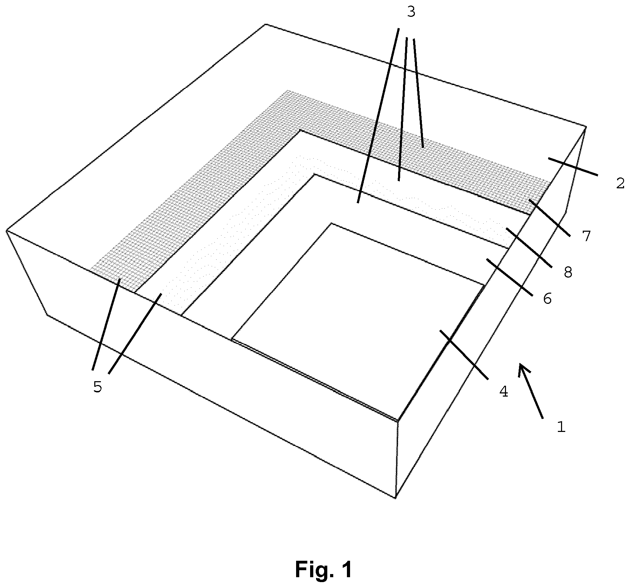

The invention will be explained in more detail hereafter by means of an example with reference to the appended figure. The invention will furthermore be explained by means of examples and comparative examples. It should be noted that the scope of the invention is not limited by the embodiments described hereafter.

The figure shows a fire retardant insulating construction panel 1 according to the invention. The construction panel 1 is made up of the following layers: a foam-comprising insulation layer 2, a composite fire retardant layer 3 and a finishing layer 4. The composite fire retardant layer 3 is made up of a reinforcement layer 5 and an adhesive layer 6 of a fire retardant adhesive. The reinforcement layer 5 comprises two sublayers, viz. a carrier layer 7 and a substrate layer 8.

### Experimental data for producing construction panels

### Method of production, embodiment 1

An insulating core of EPS foam having a width of 1 m, a length of 6 m and a thickness of 10 cm is provided with a reinforcement layer. Said reinforcement layer is loosely laid on top of said core and fixed in place by means of staples or a hot melt adhesive. The insulation core with the loose reinforcement layer present on top thereof is passed through gluing rollers (the fixation of the web at the front side functions to ensure that the web will remain on the insulation core rather than roll up on the gluing rollers, with about 2 kg of fire retardant adhesive being applied. Said fire retardant adhesive will partially penetrate through the reinforcement layer. Subsequently, a finishing layer is provided, said finishing layer consisting of 3 mm-thick chipboard provided with a white coating, thus creating a viewing side which does not require any further finishing at the construction site, when used as a roof element. This assembly is introduced into a press before the expiry of the open time of the fire retardant adhesive, wherein the adhesive can cure (about 80 minutes) in a flat condition. Subsequently, the panel can be removed from the press, and is ready for further finishing.

### Method of production, embodiment 2

An insulating core of EPS foam having a width of 0.6 m, a length of 1.5 m and a thickness of 8 cm is provided with a reinforcement layer at the upper side thereof. About 1.5 kg of a fire retardant adhesive is applied to the upper side of said assembly. Said fire retardant adhesive will partially penetrate through the reinforcement layer. The layer of fire retardant adhesive is then spread out flat and the boards comprising the yet uncured layer are stacked on shelves, where the adhesive can cure. After curing, the boards are ready for further processing. Another embodiment of a method of production concerns the pressing down of boards in a press, which boards are already provided with a spread-out fire resistant adhesive, in which case care must be taken that the adhesive will not bond to the press or the board lying on top thereof. In that case an anti-stick layer must be provided as a temporary layer, said layer may be a teflonized layer, for example, or a thin layer of PE foil. After pressing, the anti-stick layer must be removed. Thus a product is obtained which exhibits a good fire response but which has less advantageous optical properties. It may be decided to subject the product to optical finishing (for example painting) in situ, or to leave said less optically finished elements exposed to view (e.g. in an attic or other non-designated space).

### Method of production, embodiment 3

The finishing layer (chipboard having a length of 7 m, a width of 1 m and a thickness of 3 mm) is provided with a reinforcement layer and a fire retardant adhesive of about 1 kg/m². This combination has been obtained during the production process of chipboard, in which use is made of the infrastructure of the chipboard production line, in which a heated press section is used, where a reinforcement layer is provided and subsequently a fire retardant adhesive is applied, and in which the heated press ensures that the adhesive is cured and stacking of the boards is thus possible at the end of the process. The insulating EPS core is provided with about 0.5 kg/m2 of fire retardant adhesive via gluing rollers. The assembly of chipboard and reinforcement layer and fire retardant adhesive is then placed on the EPS core, to which an adhesive has been applied, with the side provided with the reinforcement layer and the fire retardant adhesive. Said assembly remains in a press until the adhesive is cured and the finishing layer is bonded to the EPS core in a flat condition of the assembly.

### Method of production, embodiment 4

An insulating core of polyurethane foam, having a width of 1.2 m, a length of 1.5 m and a thickness of 8 cm, is provided with a reinforcement layer at the upper side thereof. The reinforcement layer is loosely laid on top of the core. The insulation core with the reinforcement layer loosely provided thereon is passed through a gluing line consisting of a glue beam provided with several nozzles, with the fire retardant adhesive forming a closed layer of about 1.5 kg. The fire retardant adhesive will partially penetrate through the reinforcement layer. Subsequently, a mineralised glass web is provided on the adhesive layer. This assembly is fed into a press prior to the expiry of the open time of the fire retardant adhesive, in which the adhesive can cure in a flat condition of the assembly (about 15 minutes). Following that, the panel is removed from the press and ready for further finishing.

### Fire test

The test sample has a width of 20 cm, a height of 30 cm, and the insulation core has a thickness of 10 cm. This panel is vertically disposed in a B2 fire test cabinet. The fire load takes place via a horizontally disposed burner. The burner head is (horizontally) spaced from the test sample by a distance of 10 cm. The test criterion being used is the time at which the EPS foam behind the chipboard and the fire retardant layer catches fire (= the moment at which the fire has burnt through the chipboard + the fire retardant layer).

### Examples and comparative examples

The panels in the table below have been produced in accordance with the method as described above with reference to embodiment 1, unless stated otherwise in the table. The fire test (final column) was carried in accordance with the aforementioned fire test.

From the table it is apparent that the presence of a carrier layer (scrim) and a substrate layer (web), in combination with an adhesive provided with additives, has a positive effect on the fire retardancy properties of the construction panel.

| Glue type | Filler | Amount of Filler % m/m | Amount of glue (g/m²) | Reinforcement | Fire resistance (min) |
|---|---|---|---|---|---|
| MUF | Kaolin | 40 | 2000 | substrate layer+ carrier layer | 9 |
| UF | Extender 130 | 10 | 1500 | substrate layer + carrier layer | 6 |
| UF | Kaolin | 10 | 1500 | substrate layer + carrier layer | 5 |
| UF | Promaxon | 10 | 1500 | substrate layer + carrier layer | 6 |
| MUF | Extender 130 | 10 | 1500 | substrate layer + carrier layer | 8 |
| MUF | Kaolin | 10 | 1500 | substrate layer + carrier layer | 7 |
| MUF | Kaolin | 30 | 1500 | substrate layer + carrier layer | 7 |
| UF | Extender 130 | 10 | 1100 | substrate layer + carrier layer | 6 |
| UF | Extender 130 | 10 | 800 | carrier layer | 2 |
| UF | Extender 130 | 10 | 400 | none | 1 |
| UF | Kaolin | 40 | 4167 | substrate layer + carrier layer | >20 |
| UF | Kaolin | 30 | 1720 | carrier layer + substrate layer + 120 g substrate layer | >20 |
| UF | Kaolin | 40 | 4000 | 2 x substrate layer + carrier layer | >20 |
| PU Dyonol 1595 | C0100, graphite | 61, 15 | 1100 | substrate layer + carrier layer | 17 |
| PU Dyonol 1595 | C0100, graphite | 56, 21 | 1180 | substrate layer + carrier layer | 15 |
| PU Dyonol 1595 | C0100, graphite | 67, 11 | 1500 | substrate layer + carrier layer | >20 |
| UF | Kaolin, Wollastonite | 30, 10 | 1400 | substrate layer + carrier layer | 5 |
| UF | Kaolin, Wollastonite | 7,47 | 1400 | substrate layer + carrier layer | >20 |
| UF | Kaolin, graphite K&M PU200 | 30, 10 | 1400 | substrate layer + carrier layer | >20 |
| PU Dyonol 1595 | C0079, K&M PU120 | 72, 10 | 1166 | substrate layer + carrier layer | >20 |
| UF | Kaolin, NGS EX180 | 30, 5 | 1750 | substrate layer + carrier layer | >20 |
| UF | Kaolin (1000M), MICA MU M2/1 | 30, 10 | 1750 | substrate layer + carrier layer | >20 |
| UF | Kaolin | 40 | 1000 | .glass web + scrim + ficotech | >20 |
| UF | Kaolin | 40 | 1570 | double glass web + scrim | >20 |
| UF | Kaolin | 40 | 1430 | glass web + scrim | >20 |
| UF | Kaolin, hardener | 40, 10 | 1800 | double glass web + scrim, ficotech | >20 |
| PU | Kaolin | 20 | 1500 | glass web + scrim | 17 |
| PU | Kaolin | 30 | 1500 | glass web + scrim | >20 |
| PU | Kaolin | 40 | 1500 | glass web + scrim | >20 |
| UF | Kaolin, Bentonite | 20, 20 | 1100 | glass web | 6 |
| UF | Kaolin | 40 | 2000 | scrim | 9 |
| UF | Kaolin | 40 | 2000 | - | 2 |
| UF | Kaolin (non-calcinated) | 30 | 1500 | glass web + scrim | >20 |
| UF | Kaolin | 20 | 1000 | glass web + scrim | >20 |
| PU | Kaolin | 30 | 1500 | glass web + scrim | >20 |
| UF | Kaolin | 40 | 1800 | double glass web + scrim | 16 |

The meaning of the abbreviations used in the table is as follows:
MUF: melamine urea formaldehyde resin, water-based, marketed by Sadepan
UF: urea formaldehyde resin, water-based, marketed by BASF
PU Dyonol 1595: diphenyl methane diisocyanate, isomers and homologues marketed by Paramelt
(Meta)kaolin: clay mineral marketed by AGS Mineraux
Extender 130: extender based on wheat flour and mineral additives, marketed by Merckx
Promaxon: synthetic hydrated calcium silicate, marketed by Promat
C0100: Sodium silicate, marketed by PQ Corporation
C0079: Sodium silicate, marketed by PQ Corporation
Graphite K&M PU-200/-120: graphite, marketed by Keyser & Mackay
Wollastonite: Inosilicate, calcium silicate, marketed by Ankerpoort N.V.
Graphite NGS EX180: graphite, marketed by NGS Naturgraphit GmbH
MICA MU M2/1: Phyllosilicate, marketed by Imerys Performance & Filtration Minerals
Substrate layer: nonwoven glass web, marketed by Kirson
Carrier layer: glass-based scrim, marketed by Kirson

## Claims

1. A fire retardant insulating construction panel comprising an insulation layer that comprises a foam, **characterised in that** the construction panel also comprises at least one composite fire retardant layer bonded to the insulation layer, which fire retardant layer comprises a reinforcement layer, which reinforcement layer comprises at least one carrier layer comprising a scrim and at least one substrate layer comprising a layer of the non-woven type bonded to the carrier layer, wherein the fire retardant layer further comprises a layer of a fire retardant adhesive on the side of the reinforcement layer remote from the insulation layer, wherein the fire retardant adhesive extends up to the insulation layer and bonds to the insulation layer.

2. A construction panel according to claim 1, **characterised in that** said scrim is composed of fibres selected from the group of polyester, glass, cellulose, aramid, polyethylene naphthalate (PEN), or combinations thereof.

3. A construction panel according to claim 1 or 2, **characterised in that** said non-woven type, is selected from glass, polyester, polyethylene terephthalate (PET), polypropylene, polyethylene, polyamide and cellulose, or combinations thereof.

4. A construction panel according to one or more of the preceding claims, **characterised in that** the reinforcement layer comprises an assembly of substrate layer, carrier layer, substrate layer and carrier layer.

5. A construction panel according to any one of the preceding claims, **characterised in that** the amount of fire resistant adhesive ranges between 0.5 kg and 4 kg per square metre, preferably between 1 kg and 3 kg per square metre, more preferably between 1.5 kg and 2.5 kg per square metre.

6. A construction panel according to any one of the preceding claims, **characterised in that** the fire retardant adhesive comprises an adhesive composition selected from the group of polycondensation adhesives, inorganic adhesives and polyurethane adhesives, or combinations thereof, wherein preferably one or more of UF adhesive (urea formaldehyde), melamine adhesive, MUF adhesive (melamine urea formaldehyde), MF adhesive (melamine formaldehyde), MDI adhesive (methane diphenyl diisocyanate), isocyanate adhesive, PF adhesive (phenol formaldehyde), RF adhesive (resorcinol formaldehyde adhesive) and resorcin phenol formaldehyde adhesive is/are used as the polycondensation adhesive.

7. A construction panel according to any one of the preceding claims, **characterised in that** the fire retardant adhesive comprises one or more additives selected from the group of minerals and carbon-derived additives, wherein the minerals are preferably selected from the group of silicates, especially phyllosilicates, in particular micas and clay minerals, more in particular kaolinite, or combinations thereof, and wherein the carbon-derived additives are preferably selected from active carbon, soot, graphite, expandable graphite, graphene, or combinations thereof, wherein preferably the fire retardant adhesive comprises additives in an amount of 10-75 wt.%, preferably 20-60 wt.%, in particular 30-45 wt.%, based on the total weight of the fire retardant.

8. A construction panel according to one or more of the preceding claims, **characterised in that** the insulation layer comprises a foam selected from the group of expanded polystyrene (EPS), polyurethane, polyisocyanurate, resol foam, extruded polystyrene (XPS), polylactic acid (PLA) and epoxy, or combinations thereof.

9. A construction panel according to any one of claims 1-8, **characterised in that** the construction panel also comprises a finishing layer on at least one of its outer sides, wherein the composite fire retardant layer is disposed between the insulation layer and the finishing layer, wherein preferably the finishing layer is bonded to the reinforcement layer by means of the fire retardant adhesive.

10. A construction panel according to claim 9, **characterised in that** finishing layer comprises a hard board material selected from the group of wood, plastic (polymers), metal/alloys, gypsum and chipboard, or combinations thereof.

11. A method for producing a construction panel according to one or more of claims 1-10, comprising the steps of
A providing an insulation layer comprising a foam,
B providing a reinforcement layer, and
C applying an adhesive layer of a fire retardant adhesive such that the reinforcement layer of step B is embedded between the aforesaid adhesive layer and the insulation layer comprising a foam of step A, with the fire retardant adhesive penetrating as far as the insulation layer of step A and bonding thereto.

12. A method according to claim 11, **characterised in that** the side of the reinforcement layer remote from the insulation layer is bonded to a finishing layer, preferably by means of the fire retardant adhesive.

13. A method for producing a construction panel according to one or more of claims 1-10, comprising the steps of
N providing a carrier layer,
O providing a substrate layer,
P impregnating the assembly of the carrier layer of step N and the substrate layer of step O with a fire retardant adhesive,
Q providing an insulation layer comprising a foam, and
R durably bonding the assembly of carrier layer and substrate layer impregnated in step P to the aforesaid insulation layer of step Q, and possibly providing a finishing layer on the side remote from the insulation layer.

## Patentansprüche

1. Eine feuerhemmende Bauisolierplatte, welche eine einen Schaumstoff umfassende Isolierschicht umfasst, **dadurch gekennzeichnet, dass** die Bauplatte auch mindestens eine mit der Isolierschicht verbundene feuerhemmende Verbundschicht umfasst, wobei die feuerhemmende Schicht eine Verstärkungsschicht umfasst, wobei die Verstärkungsschicht mindestens eine Trägerschicht umfasst, die einen Gitterstoff und mindestens eine Substratschicht umfasst, welche eine Schicht aus einem Vliesstoff umfasst und mit der Trägerschicht verbunden ist, wobei die feuerhemmende Schicht weiterhin eine Schicht aus einem feuerhemmenden Klebstoff auf der der Isolierschicht abgewandten Seite der Verstärkungsschicht umfasst, wobei sich der feuerhemmende Klebstoff bis zu der Isolierschicht erstreckt und mit der Isolierschicht verbunden ist.

2. Eine Bauplatte nach Anspruch 1, **dadurch gekennzeichnet, dass** der Gitterstoff aus Fasern aufgebaut ist, die aus der Gruppe ausgewählt sind, die aus Polyester, Glas, Cellulose, Aramid und Polyethylennaphthalat(PEN) oder Kombinationen davon besteht.

3. Eine Bauplatte nach Anspruch 1 oder 2, **dadurch gekennzeichnet, dass** der Vliesstoff aus Glas, Polyester, Polyethylenterephthalat (PET), Polypropylen, Polyethylen, Polyamid und Cellulose oder Kombinationen davon ausgewählt ist.

4. Eine Bauplatte nach einem oder mehreren der vorhergehenden Ansprüche, **dadurch gekennzeichnet, dass** die Verstärkungsschicht einen Verbund aus Substratschicht, Trägerschicht, Substratschicht und Trägerschicht umfasst.

5. Eine Bauplatte nach einem der vorhergehenden Ansprüche, **dadurch gekennzeichnet, dass** das die Menge des feuerhemmenden Klebstoffs zwischen 0,5 kg und 4 kg pro Quadratmeter, vorzugsweise zwischen 1 kg und 3 kg pro Quadratmeter, und besonders bevorzugt zwischen 1,5 kg und 2,5 kg pro Quadratmeter liegt.

6. Eine Bauplatte nach einem der vorhergehenden Ansprüche, **dadurch gekennzeichnet, dass** der feuerhemmende Klebstoff eine Klebstoffzusammensetzung umfasst, die aus der Gruppe ausgewählt ist, die aus Polykondensationsklebstoffen, anorganischen Klebstoffen und Polyurethanklebstoffen oder Kombinationen davon besteht, wobei vorzugsweise ein oder mehrere von UF-Klebstoff(Harnstoff- Formaldehyd), Melaminklebstoff, MUF-Klebstoff (Melamin-Harnstoff-Formaldehyd), MF-Klebstoff (Melamin-Formaldehyd), MDI-Klebstoff (Methandiphenyl-Diisocyanat), Isocyanatklebstoff, PF-Klebstoff (Phenol-Formaldehyd), RF-Klebstoff (Resorcin-Formaldehyd-Klebstoff) und Resorcin-Phenol-Formaldehyd-Klebstoff als Polykondensationsklebstoff verwendet wird/werden.

7. Eine Bauplatte nach einem der vorhergehenden Ansprüche, **dadurch qekennzeichnet, dass** der feuerhemmende Klebstoff ein oder mehrere Additive umfasst, die aus der Gruppe ausgewählt sind, die aus Mineralstoffen und von Kohlenstoff abgeleiteten Additiven besteht, wobei die Mineralstoffe vorzugsweise aus der Gruppe ausgewählt sind, die aus Silicaten, insbesondere Phyllosilicaten, speziell Glimmer und Tonminerale, noch spezieller Kaolinit, oder Kombinationen davon besteht, und wobei die von Kohlenstoff abgeleiteten Additive vorzugsweise aus Aktivkohle, Ruß, Graphit, expandierbarem Graphit und Graphen oder Kombinationen davon ausgewählt sind, wobei vorzugsweise der feuerhemmende Klebstoff Additive mit einem Anteil von 10 bis 75 Gew.-%, vorzugsweise 20 bis 60 Ges.-%, und insbesondere 30 bis 45 Gew.-%, bezogen auf das Gesamtgewicht des feuerhemmenden Mittels, umfasst.

8. Eine Bauplatte nach einem oder mehreren der vorhergehenden Ansprüche, **dadurch gekennzeichnet, dass** die Isolierschicht einen Schaumstoff umfasst, der aus der Gruppe ausgewählt ist, die aus expandierbarem Polystyrol (EPS), Polyurethan, Polyisocyanurat, Resolschaumstoff, extrudiertem Polystyrol(XPS), Polymilchsäure (PLA) und Epoxidharz oder Kombinationen davon besteht.

9. Eine Bauplatte nach einem der Ansprüche 1 bis 8, **dadurch gekennzeichnet, dass** die Bauplatte auch eine Oberflächenschicht auf mindestens einer ihrer Außenseiten umfasst, wobei die feuerhemmende Verbundschicht zwischen der Isolierschicht und der Oberflächenschicht angeordnet ist und vorzugsweise die Oberflächenschicht durch den feuerhemmenden Klebstoff mit der Verstärkungsschicht verbunden ist.

10. Eine Bauplatte nach Anspruch 9, **dadurch gekennzeichnet, dass** die Oberflächenschicht ein hartes Plattenmaterial umfasst, das aus der Gruppe ausgewählt ist, die aus Holz, Kunststoffen (Polymeren), Metallen/Legierungen, Gips und Spanplatten oder Kombinationen davon besteht.

11. Ein Verfahren zur Herstellung einer Bauplatte nach einem oder mehreren der Ansprüche 1 bis 10, welches die Schritte:
A Bereitstellen einer einen Schaumstoff umfassenden Isolierschicht,
B Bereitstellen einer Verstärkungsschicht und
C Aufbringen einer Klebstoffschicht aus einem feuerhemmenden Klebstoff derart, dass die Verstärkungsschicht aus Schritt B zwischen dieser Klebstoffschicht und der den Schaumstoff umfassenden Isolierschicht aus Schritt A eingebettet wird, wobei der feuerhemmende Klebstoff bis zu der Isolierschicht aus Schicht A vordringt und sich mit dieser verbindet,
umfasst.

12. Ein Verfahren nach Anspruch 11, **dadurch gekennzeichnet, dass** die von der Isolierschicht abgewandte Seite der Verstärkungsschicht mit einer Oberflächenschicht, vorzugsweise durch den feuerhemmenden Klebstoff, verbunden wird.

13. Ein Verfahren zur Herstellung einer Bauplatte nach einem oder mehreren der Ansprüche 1 bis 10, welches die Schritte:
N Bereitstellen einer Trägerschicht,
0 Bereitstellen einer Substratschicht,
P Imprägnieren des Verbunds aus der Trägerschicht aus Schritt N und der Substratschicht aus Schritt 0 mit einem feuerhemmenden Klebstoff,
Q Bereitstellen einer einen Schaumstoff umfassenden Isolierschicht und
R dauerhaftes Verbinden des in Schritt P imprägnierten Verbunds aus Trägerschicht und Substratschicht mit dieser Isolierschicht aus Schritt Q und gegebenenfalls Bereitstellen einer Oberflächenschicht auf der der Isolierschicht abgewandten Seite
umfasst.

## Revendications

1. Panneau de construction isolant ignifuge comprenant une couche d'isolation qui comprend une mousse, **caractérisé en ce que** le panneau de construction comprend également au moins une couche ignifuge composite liée à la couche d'isolation, laquelle couche ignifuge comprend une couche de renforcement, laquelle couche de renforcement comprend au moins une couche de support comprenant un canevas et au moins une couche de substrat comprenant une couche du type non tissé liée à la couche de support, où la couche ignifuge comprend en outre une couche d'un adhésif ignifuge sur le côté de la couche de renforcement éloigné de la couche d'isolation, où l'adhésif ignifuge s'étend jusqu'à la couche d'isolation et se lie à la couche d'isolation.

2. Panneau de construction selon la revendication 1, **caractérisé en ce que** ledit canevas est composé de fibres choisies dans le groupe constitué de polyester, de verre, de cellulose, d'aramide, de poly(naphtalate d'éthylène) (PEN), ou de leurs combinaisons.

3. Panneau de construction selon la revendication 1 ou 2, **caractérisé en ce que** ledit type non tissé, est choisi parmi le verre, le polyester, le poly(téréphtalate d'éthylène) (PET), le polypropylène, le polyéthylène, le polyamide et la cellulose, ou leurs combinaisons.

4. Panneau de construction selon une ou plusieurs des revendications précédentes, **caractérisé en ce que** la couche de renforcement comprend un assemblage d'une couche de substrat, d'une couche de support, d'une couche de substrat et d'une couche de support.

5. Panneau de construction selon l'une quelconque des revendications précédentes, **caractérisé en ce que** la quantité d'adhésif ignifuge est comprise entre 0,5 kg et 4 kg par mètre carré, de préférence entre 1 kg et 3 kg par mètre carré, plus préférablement entre 1,5 kg et 2,5 kg par mètre carré.

6. Panneau de construction selon l'une quelconque des revendications précédentes, **caractérisé en ce que** l'adhésif ignifuge comprend une composition adhésive choisie dans le groupe constitué d'adhésifs de polycondensation, d'adhésifs inorganiques et d'adhésifs de polyuréthane, ou de leurs combinaisons, où, de préférence, un ou plusieurs parmi un adhésif UF (urée-formaldéhyde), un adhésif mélamine, un adhésif MUF (mélamine-urée-formaldéhyde), un adhésif MF (mélamine-formaldéhyde), un adhésif MDI (méthane-diphényle-diisocyanate), un adhésif isocyanate, un adhésif PF (phénol-formaldéhyde), un adhésif RF (adhésif résorcinol-formaldéhyde) et un adhésif résorcine-phénol-formaldéhyde est/sont utilisés comme étant l'adhésif de polycondensation.

7. Panneau de construction selon l'une quelconque des revendications précédentes, **caractérisé en ce que** l'adhésif ignifuge comprend un ou plusieurs additif(s) choisi(s) dans le groupe de minéraux et d'additifs dérivés du carbone, où les minéraux sont de préférence choisis dans le groupe de silicates, notamment les phyllosilicates, en particulier les micas et les minéraux argileux, plus particulièrement la kaolinite, ou leurs combinaisons, et où les additifs dérivés du carbone sont de préférence choisis parmi le charbon actif, la suie, le graphite, le graphite expansible, le graphène, ou leurs combinaisons, où, de préférence, l'adhésif ignifuge comprend des additifs en une quantité de 10 à 75% en poids, de préférence de 20 à 60% en poids, en particulier de 30 à 45% en poids, par rapport au poids total du produit ignifuge.

8. Panneau de construction selon une ou plusieurs des revendications précédentes, **caractérisé en ce que** la couche d'isolation comprend une mousse choisie dans le groupe constitué de polystyrène expansé (EPS), de polyuréthane, de polyisocyanurate, de mousse de résol, de polystyrène extrudé (XPS), de l'acide polylactique (PLA) et de l'époxy, ou de leurs combinaisons.

9. Panneau de construction selon l'une quelconque des revendications 1 à 8, **caractérisé en ce que** le panneau de construction comprend également une couche de finition sur au moins l'un de ses côtés externes, où la couche ignifuge composite est disposée entre la couche d'isolation et la couche de finition, où, de préférence, la couche de finition est liée à la couche de renforcement au moyen de l'adhésif ignifuge.

10. Panneau de construction selon la revendication 9, **caractérisé en ce que** la couche de finition comprend un matériau de planche dure choisi dans le groupe constitué de bois, de plastique (polymères), de métaux/alliages, de gypse et du panneau de particules de bois, ou de leurs combinaisons.

11. Procédé de production d'un panneau de construction selon une ou plusieurs des revendications 1 à 10, comprenant les étapes consistant
A à fournir une couche d'isolation comprenant une mousse,
B à fournir une couche de renforcement, et
C à appliquer une couche adhésive d'un adhésif ignifuge de sorte que la couche de renforcement de l'étape B soit incorporée entre la couche adhésive précitée et la couche d'isolation comprenant une mousse de l'étape A, l'adhésif ignifuge pénétrant jusqu'à la couche d'isolation de l'étape A et se liant à celle-ci.

12. Procédé selon la revendication 11, **caractérisé en ce que** le côté de la couche de renforcement éloigné de la couche d'isolation est lié à une couche de finition, de préférence au moyen de l'adhésif ignifuge.

13. Procédé de production d'un panneau de construction selon une ou plusieurs des revendications 1 à 10, comprenant les étapes consistant
N à fournir une couche de support,
O à fournir une couche de substrat,
P à imprégner l'assemblage de la couche de support de l'étape N et de la couche de substrat de l'étape O d'un adhésif ignifuge,
Q à fournir une couche d'isolation comprenant une mousse, et
R à lier de manière durable l'assemblage de la couche de support et de la couche de substrat imprégné dans l'étape P à la couche d'isolation précitée de l'étape Q, et éventuellement à fournir une couche de finition sur le côté éloigné de la couche d'isolation.
